# EUROPEAN PATENT APPLICATION

(11) **EP 3 225 344 A1**
(43) Date of publication of application: **04.10.2017**
(21) Application number: 17159495.5
(22) Date of filing: 07.03.2017
(51) Int. Cl.: B23K 9/095, B23K 9/12, B23K 9/133, B65H 51/30

(54) **METHODS AND APPARATUS TO CONTROL ADVANCEMENT OF A WELDING ELECTRODE WIRE FOR ARC IGNITION**

(30) Priority: 31.03.2016 US 201662316238 P; 30.01.2017 US 201715419519
(71) Applicant: Illinois Tool Works Inc., Glenview, IL 60025 (US)
(72) Inventor: KNOENER, Craig S., Glenview, Illinois, 60025 (US); MACMULLEN, Zach, Glenview, Illinois, 60025 (US); TYLER, Charles A., Glenview, Illinois, 60025 (US); JOHNSON, Lucas C., Glenview, Illinois, 60025 (US)
(74) Representative: Trinks, Ole

(57) **Abstract**

Methods and apparatus to control advancement of a welding electrode wire for arc ignition are disclosed. An example electrode wire feeder includes a wire feed motor to advance electrode wire to a welding torch, a temperature monitor to determine a temperature of the electrode wire using at least one of a temperature measurement or a thermal model, and a motor controller to control a run-in wire speed based on a temperature of the electrode wire.

## Description

### BACKGROUND

The invention relates generally to welding systems, and more particularly to methods and apparatus to control advancement of a welding electrode wire for lower limit arc ignition.

Igniting weld current in a wire welding process can be difficult and/or inconsistent, particularly for inexperienced operators. Run-in wire speed may be adjusted by the welding operator. Conventionally, run-in wire speed is represented to the welding operator as either an absolute wire speed or, more commonly, as a percentage of the weld wire speed. In some cases, run-in may be turned off, which is equivalent to using a wire feed speed of 100% of the steady-state (i.e., programmed) wire feed speed during arc ignition.

### SUMMARY

Methods and apparatus to control advancement of a welding electrode wire for arc ignition, substantially as illustrated by and described in connection with at least one of the figures, as set forth more completely in the claims.

### BRIEF DESCRIPTION OF THE DRAWINGS

FIG. 1A is a schematic diagram of an example welding-type system having an integral welding-type power source and wire feeder, and configured to control a run-in wire feed speed based on a temperature of an electrode wire, in accordance with aspects of this disclosure;
FIG. 1B is a schematic diagram of another example welding-type system having a welding-type power source separate from and connected to a wire feeder, and configured to control a run-in wire feed speed based on a temperature of an electrode wire, in accordance with aspects of this disclosure;
FIG. 2A is a graph illustrating an example proportional relationship between an electrode wire temperature and a run-in wire feed speed used by the example systems of FIGS. 1A and/or 1B, in accordance with aspects of this disclosure;
FIG. 2B is a graph illustrating another example proportional relationship between an electrode wire temperature and a run-in wire feed speed used by the example systems of FIGS. 1A and/or 1B, in accordance with aspects of this disclosure;
FIG. 2C is a graph illustrating another example proportional relationship between an electrode wire temperature and a run-in wire feed speed used by the example systems of FIGS. 1A and/or 1B, in accordance with aspects of this disclosure;
FIG. 3 is a flowchart representative of example method which may be implemented by the example systems of FIGS. 1A and/or 1B to control wire feed speeds during multiple welding operations; and
FIG. 4 is a flowchart representative of example method which may be implemented by the example systems of FIGS. 1A and/or 1B to determine run-in wire feed speed based on a wire electrode temperature; and
FIG. 5 is a flowchart representative of another example method which may be implemented by the example systems of FIGS. 1A and/or 1B to determine run-in wire feed speed based on a wire electrode temperature.

### DETAILED DESCRIPTION

A conventional method to improve arc ignition is to advance the wire at a slower wire speed before arc ignition. This state before the arc ignites and the wire is advancing toward the workpiece is called run-in.

In some conventional systems, run-in wire speed is fixed to a set wire feed speed, such as 60 inches per minute (IPM), for the internal motor to improve cold wire starts. However, welding operators who perform repetitive welds (e.g., a series of tack welds) may find the slow run-in speed to cause problems for weld speed, because subsequent welds do not necessarily start with a cold wire and the added time due to the slow run-in wire speed becomes significant. Some conventional wire feeders allow the welding operator to adjust run-in wire feed speed, which is independent of wire temperature. So in this case, hot wire starts improve, but cold wire starts degrade.

Disclosed example welding systems and/or wire feeders automatically adjust run-in wire feed speed based on an actual or estimated wire temperature. Disclosed examples improve welding operations such as repetitive tack welding by automatically increasing the run-in wire speed for a hotter electrode wire. Due to the increased run-in speed, the time from pulling the trigger to arc ignition can be reduced and, as a result, the cumulative reduction in arc ignition time over multiple weld operations can be significantly decreased.

Disclosed examples enable more consistent arc ignition by automatically increasing and/or decreasing the run-in speed to improve the ease of arc ignition. For a given wire temperature, if the run-in wire speed is too fast, the arc ignition tends to stumble (e.g., the welding power source delivers to little power to melt the wire for the given wire speed). Conversely, for a given wire temperature, if the run-in wire speed is too slow, the arc ignitions tend to flare (e.g., the welding power source delivers too much power to melt the wire for the given wire speed).

As used herein, the term "run-in wire feed speed" refers to a feed speed of electrode wire immediately following a trigger actuation event and until a steady state feed speed is reached. The trigger actuation event may be a manual trigger pull or a torch actuation caused by an automated welding device such as a welding robot. The run-in wire feed speed may be applied prior to arc ignition and may be slower or faster than the steady state feed speed.

As used herein, the term "proportional relationship" includes directly proportional (e.g., an increase in variable A results in an increase in variable B) and/or inversely proportional relationships (e.g., an increase in variable A results in a decrease in variable B).

Disclosed example wire feeding systems include a wire feed motor to advance electrode wire to a welding torch, a temperature monitor to determine a temperature of the electrode wire using at least one of a temperature measurement or a thermal model, and a motor controller to control a run-in wire speed based on the temperature of the electrode wire.

Some disclosed example systems include a wire feed motor to advance electrode wire to a welding torch, a welding-type power source to provide welding-type power to the welding torch, a temperature monitor to determine a temperature of the electrode wire using at least one of a temperature measurement or a thermal model, and a motor controller to control a run-in wire speed based on the temperature of the electrode wire.

In some examples, the motor controller selects the run-in wire speed based on a proportional relationship between the temperature of the electrode wire and the run-in wire speed. In some examples, the proportional relationship includes discrete run-in wire feed speeds corresponding to elapsed time periods following an end of a weld. In some examples, the proportional relationship includes a continuous decrease in the run-in wire speed as an elapsed time following an end of a weld increases during a time period following the end of the weld.

In some example systems, the motor controller determines an upper limit of the run-in wire speed corresponding to an upper temperature threshold of the electrode wire, and decreases the run-in wire speed from the upper limit as time progresses following a first weld until an arc is initiated for a second weld or a lower limit of the run-in wire speed is reached. In some examples, the motor controller determines a lower limit of the run-in wire speed corresponding to at least one of a lower temperature threshold or a threshold elapsed time following a previous weld.

Some example systems further include a temperature sensor to measure the temperature of at least one of the electrode wire or a component in thermal communication with the electrode wire, where the temperature sensor includes at least one of an infrared optical temperature sensor, a thermocouple, or a thermistor. In some such examples, the temperature sensor communicates the temperature measurement to the temperature monitor via at least one of a wired communication or a wireless communication, and the temperature monitor applies the thermal model to the temperature measurement to determine the temperature of the electrode wire.

Disclosed example methods and machine readable instructions cause a control circuit to identify an end of a welding arc at a welding torch, select a run-in wire speed based on a temperature of electrode wire to be fed by the welding torch, identify a trigger actuation event at the welding torch, and control a wire feeder to feed the electrode wire at the run-in wire speed.

In some examples, the instructions cause the control circuit to identify an arc ignition and, in response to the arc ignition, control the wire feeder to feed the wire at a setpoint wire feed speed. In some examples, the instructions cause the control circuit to select the run-in wire speed based on a proportional relationship between the temperature of the electrode wire and the run-in wire speed. In some examples, the instructions cause the control circuit to select the run-in wire speed based on the temperature of the electrode wire comprises determining an elapsed time following the end of the welding arc, where the temperature being based on the elapsed time according to a time-temperature relationship.

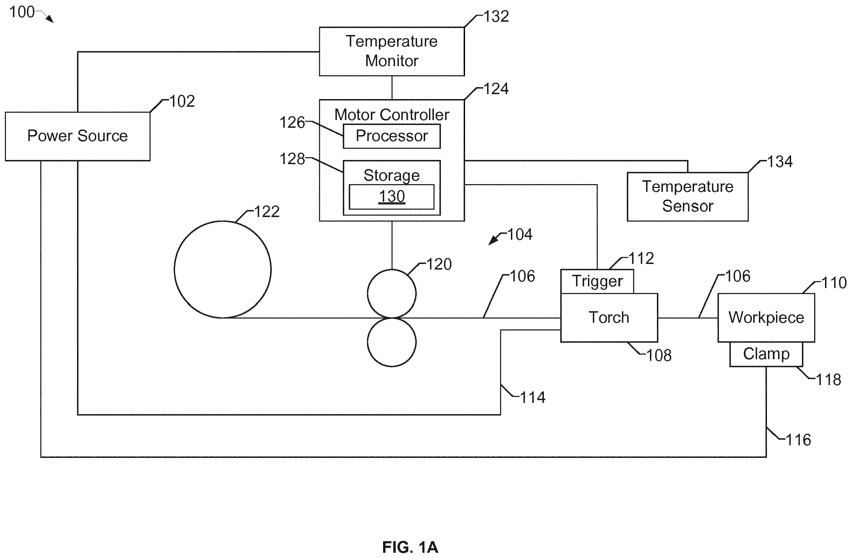

FIG. 1A is a schematic diagram of an example welding-type system 100 having an integral welding-type power source 102 and wire feeder 104. As described in more detail below, the example system 100 of FIG. 1A is configured to control a run-in wire feed speed based on a temperature of an electrode wire 106.

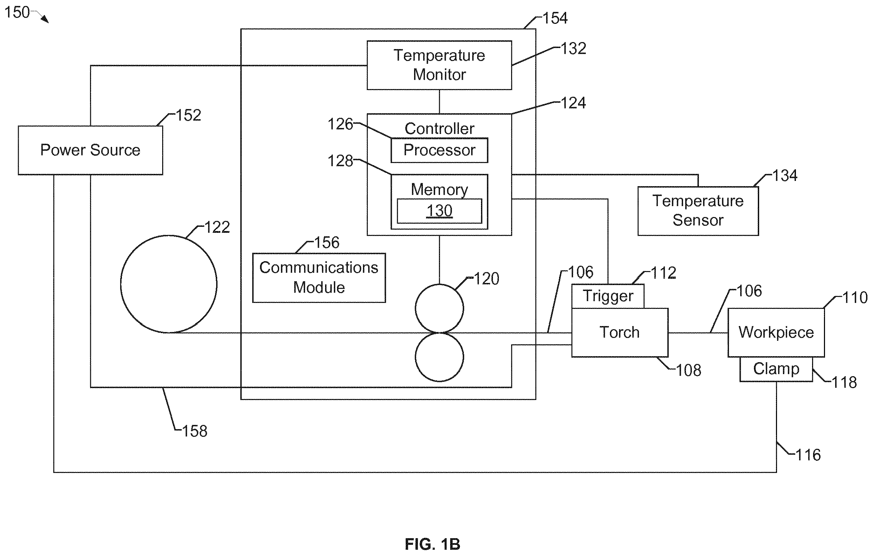

The example welding-type power source 102 of FIGS. 1A and 1B includes any device capable of supplying welding-type power, including inverters, converters, choppers, resonant power supplies, quasi-resonant power supplies, etc., as well as control circuitry and other ancillary circuitry associated therewith. Welding-type power refers to power suitable for welding, plasma cutting, induction heating, CAC-A and/or hot wire welding/preheating (including laser welding and laser cladding).

The welding-type system 100 includes a welding torch 108 that defines the location of a welding operation with respect to a workpiece 110. In cases in which the welding operation is a manual operation (e.g., performed by a human operator), the torch 108 includes a trigger 112 that enables welding (when depressed) and disables welding (when released). The power source 102 provides welding-type power to the torch 108 (e.g., via a weld cable 114, a work cable 116, and/or a work clamp 118) in response to the trigger 112. A wire feed motor 120 advances the electrode wire 106 from a wire supply 122 (e.g., a roll of wire) to the torch 108, where the electrode wire 106 is consumed during welding operations. The term "advancing" refers to feeding a direction from the wire supply 122 toward the torch 108.

The system 100 includes a motor controller 124 (e.g., control circuitry, which may include logic circuits) to control a wire feed speed of the wire feed motor 120. The motor controller 124 includes a processor 126 and one or more machine readable storage device(s) 128. The motor controller 124 may be implemented as part of general-purpose control circuitry, such as executing instructions with the processor 126 to implement motor control functionality.

The motor controller 124 controls the wire feed motor 120 in two phases, including setpoint feeding and run-in. The setpoint feed speed is a speed at which an operator and/or an automatic process sets a wire feed speed for a welding operation. The setpoint feed speed may be based on, for example, a welding voltage setpoint, a welding current setpoint, a type of joint, an electrode material, a workpiece material, and/or other factors.

When the trigger 112 is depressed and prior to arc ignition at the torch 108, the motor controller 124 controls the wire feed motor 120 to feed the electrode wire 106 to the torch 108 at a run-in feed speed based on the temperature of the electrode wire 106. Example run-in feed speeds range from 25% of the setpoint feed speed to 150% of the setpoint feed speed. When the arc has been ignited at the electrode wire 106 fed from the torch 108, the motor controller 124 changes the wire feed speed from the run-in feed speed to the welding setpoint feed speed.

Following a welding operation (e.g., when the arc is extinguished), the electrode wire 106 at the torch 108 has an elevated temperature due to the welding-type current that flowed through the wire immediately prior to the cessation of the welding operation. The temperature of the electrode wire 106 decreases as time elapses after the end of the prior weld. A temperature monitor 132 determines the run-in wire feed speed based on a temperature measurement of the electrode wire (or a representative component) and/or a thermal model. In some examples, the temperature monitor 132 monitors the elapsed time and may approximate the wire temperature by applying the elapsed time (e.g., use the elapsed time as a proxy for temperature of the electrode wire 106) to a thermal model that models a temperature change in the electrode wire over time, which may include using one or more characteristics of the electrode wire 106. After a threshold time period has elapsed, the temperature monitor 132 may assume that the run-in will operate in a same manner as a cold (e.g., unused) electrode wire and return to a default run-in wire feed speed.

To determine the run-in feed speed, the example temperature monitor 132 uses proportional relationship(s) 130 stored in the example storage device(s) 128. The example proportional relationship(s) 130 specify one or more relationship(s) between wire feed speed and the temperature of the electrode wire 106. Examples of the proportional relationship(s) 130 may include data points, algorithms, and/or equations. The proportional relationship 130 may be directly proportional or inversely proportional, for example, depending on how the variables in the proportional relationship 130 are defined. Example proportional relationship(s) 130 include contiguous relationships (e.g., defined by linear, logarithmic, exponential, inverse exponential, and/or any other type of equation), and/or discontiguous relationships, and/or discrete run-in wire feed speeds (e.g., stepped relationships). For example, it has been observed that arc ignition occurs more readily with higher run-in feed speeds when the electrode wire 106 has a higher temperature than when the electrode wire 106 has a lower temperature. The example motor controller 124 leverages this observation by applying a measured and/or estimated temperature of the electrode wire 106 to the proportional relationship 130 (e.g., a proportional relationship between wire feed speed and measured temperature of the electrode wire 106).

Additionally or alternatively, the example temperature monitor 132 receives a temperature measurement signal from a temperature sensor 134. The example temperature sensor 134 may be an infrared non-contact thermal sensor mounted to the torch 108 to conduct non-contact temperature measurement of the electrode wire 106 and/or a contact-based temperature sensor such as a thermocouple or a thermistor. In this manner, the temperature sensor 134 may be configured to focus a point of non-contact measurement on the tip of the electrode wire 106 regardless of the orientation and/or movement of the torch 108.

The temperature sensor 134 may be configured to measure any location, which may include measuring a consumable component and/or a non-consumable component in the weld torch. For example, the temperature sensor 134 may be a sensor in thermal communication with the contact tip or other consumable or non-consumable component. In some examples, the temperature sensor 134 includes a radio frequency identification (RFID) tag or other wireless communications device to communicate a temperature measurement in response to a request (e.g., an RFID signal) transmitted by the temperature monitor 132. In some examples, the temperature monitor 132 uses a thermal model to determine the electrode wire temperature based on the location from which the temperature measurement is obtained (e.g., a model indicating the electrode wire temperature based on a measured contact tip temperature).

FIG. 1B is a schematic diagram of another example welding-type system 150 in which a welding-type power source 152 is separate from and connected to a wire feeder 154. In the welding-type system 150, the wire feeder 154 is configured to control a run-in wire feed speed based on a temperature of the electrode wire 106. In the example of FIG. 1B, the wire feeder 154 includes the controller 124, which determines the run-in wire feed speed and controls the wire feed motor 120 as described above.

In some examples, the wire feeder 154 includes communications module 156 to transmit and/or receive communications from the power supply and/or from another device, which may implement the run-in wire feed speed determination disclosed herein and communicate control information to the wire feeder 154 for control of the wire feed motor 120. The communications module 156 may communicate via weld cable communications (e.g., via a weld cable 158 in the weld circuit between the power source 152 and the wire feeder 154) and/or other wired communications and/or via wireless communications. The communications module 156 transmits information such as wire temperature information and/or elapsed time information with reference to release of the trigger. In some other examples, elapsed time information may be determined by the power source 152 by detecting an elapsed time after the weld current output falls below a threshold current. The communications module 156 receives information such as the setpoint feed speed, the run-in wire feed speed, and/or the proportional relationship(s) 130.

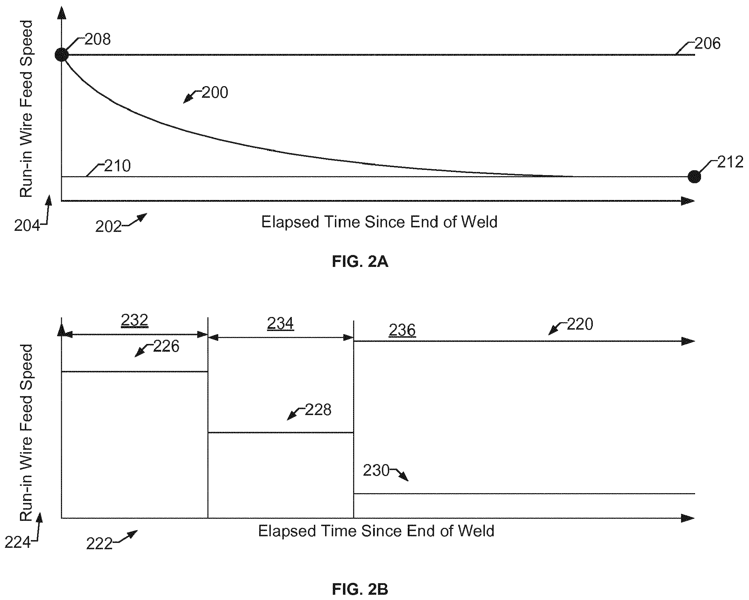

FIG. 2A is a graph illustrating an example proportional relationship 200 between an electrode wire temperature 202 (e.g., via an elapsed time since a previous weld) and a run-in wire feed speed 204 used by the example systems 100, 150 of FIGS. 1A and/or 1B. The relationship 200 may be created using a thermal model based on one or more of the weld current of a previous weld, the material composition of the electrode wire 106, and/or a diameter of the electrode wire 106. The relationship 200 of FIG. 2A is an example of a contiguous relationship between the elapsed time since the previous weld (e.g., determined via the temperature monitor 132 of FIGS. 1A and/or 1B) and the run-in wire feed speed 204. The relationship 200 is not a linear relationship (e.g., a y=ax+b relationship), and represents an estimated decline in the temperature of the electrode wire 106 over time, with a run-in temperature. The relationship 200 may be defined using linear, quadratic, exponential, logarithmic, inverse proportional and/or any other type or classification of relation.

In some examples, the temperature monitor 132 determines an upper limit 206 of the run-in wire speed (e.g., a maximum run-in wire speed) that corresponds to an upper temperature threshold 208 (e.g., a maximum temperature and/or minimum elapsed time, which may be immediately after extinguishing of the arc) of the electrode wire 106. Additionally or alternatively, the temperature monitor 132 determines a lower limit 210 of the run-in wire speed 204 (e.g., the minimum run-in wire feed speed, the nominal run-in wire feed speed used for cold wires, etc.). The lower limit 210 may correspond a lower temperature threshold and/or a threshold elapsed time 212 following a previous weld. The temperature monitor 132 decreases the run-in wire speed 204 from the upper limit 206 of the run-in wire speed as the elapsed time 202 increases following a first weld until an arc is initiated for a second weld, and/or until the lower limit 210 of the run-in wire speed 204 is reached.

FIG. 2B is a graph illustrating another example proportional relationship 220 between an electrode wire temperature 222 (e.g., via an elapsed time since a previous weld, measured by the temperature monitor 132) and a run-in wire feed speed 224 used by the example systems of FIGS. 1A and/or 1B. The relationship 220 may be created using a thermal model based on one or more of the weld current of a previous weld, the material composition of the electrode wire 106, and/or a diameter of the electrode wire 106. The example relationship 220 represents a set of discrete relationships 226, 228, 230 that correspond to different elapsed time ranges 232, 234, 236. In the example of FIG. 2B, the motor controller 2B uses a wire feed speed 224 defined by the relationships 226, 228, 230 when the elapsed time is within the corresponding time range 232, 234, 236. The example time range 236 extends indefinitely after the time range 234 (e.g., the motor controller 124 assumes a cold wire after a threshold time has elapsed).

The example motor controller 124 may identify an upper run-in wire feed speed limit and/or a lower run-in wire feed speed limit for the relationship 220 of FIG. 2B.

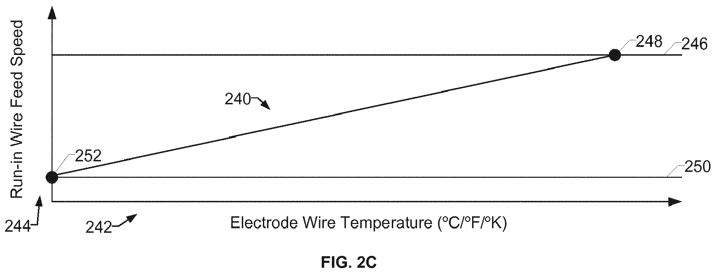

FIG. 2C is a graph illustrating an example proportional relationship 240 between an electrode wire temperature 242 (e.g., measured by the temperature sensor 134 of FIGS. 1A and/or 1B) and a run-in wire feed speed 244 used by the example systems 100, 150 of FIGS. 1A and/or 1B. The relationship 240 of FIG. 2C is an example of a contiguous relationship between an electrode wire temperature 242 and the run-in wire feed speed 204. As illustrated in FIG. 2C, the relationship 240 is a linear relationship defined between 1) an upper limit 246 on the run-in wire feed speed 244 that corresponds to an upper wire temperature limit 248 and 2) a lower limit 250 on the run-in wire feed speed (e.g., a nominal run-in speed) that corresponds to a lower wire temperature limit 252. The upper wire temperature limit 248 does not necessarily correspond to the maximum possible temperature that may be achieved by the electrode wire 106. Similarly, the lower wire temperature limit 252 does not necessarily correspond to a completely cold (i.e., unused) electrode wire.

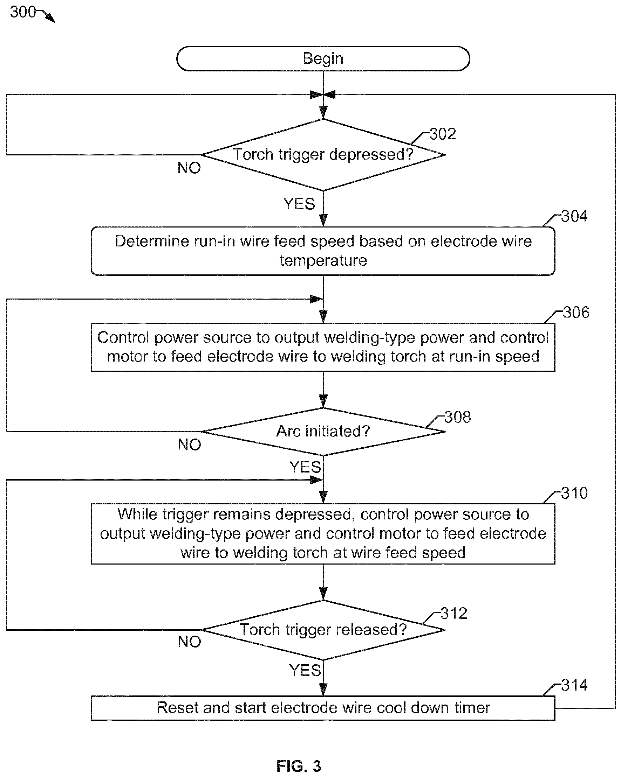

FIGS. 3, 4, and 5 illustrate example methods that may be used to implement the systems and/or apparatus disclosed herein. In some examples, the disclosed methods can be implemented by a processor or other logic circuit executing machine readable instructions stored on a non-transitory machine readable storage medium, such as a volatile memory device, a non-volatile memory device, a mass storage device (e.g., a hard disk, a solid state storage drive, etc.), removable media (e.g., a flash drive, etc.), and/or any other form of machine readable storage.

FIG. 3 is a flowchart representative of example method 300 which may be implemented by the example systems 100, 150 of FIGS. 1A and/or 1B to control wire feed speeds during multiple welding operations. The example method 300 may be implemented by the motor controller 124 and the temperature monitor 132 of FIGS. 1A and/or 1B.

In block 302, the motor controller 124 determines whether a torch trigger 112 is depressed. For example, the torch trigger 112 may provide a signal to the motor controller 124 indicating whether the trigger 112 is depressed or released. In implementations using automated welding (e.g., robotic welding, submerged arc welding, and/or other non-manual methods), the motor controller 124 may use a replacement signal for the trigger, such as a weld initiation signal to start a run-in procedure. If the trigger 112 is not depressed (block 302), control returns to block 302 to wait for the trigger 112.

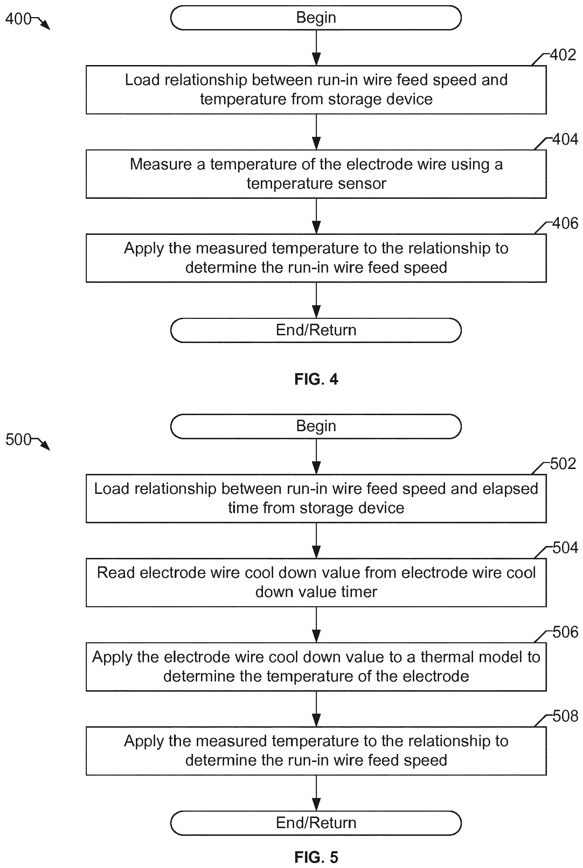

When the trigger 112 is depressed (or the run-in procedure is otherwise initiated) (block 302), in block 304 the temperature monitor 132 determines a run-in wire feed speed based on a temperature of the electrode wire 106. For example, the temperature monitor 132 may measure the electrode wire temperature and/or use an elapsed time since a prior weld to determine the run-in speed. Example methods that may be performed to implement block 304 are described below with reference to FIGS. 4 and 5.

In block 306, the motor controller 124 controls a power source (e.g., the power source 102 of FIGS. 1A and/or 1B) to output welding-type power and controls the wire feed motor 120 to feed the electrode wire 106 to the welding torch 108 at the run-in speed.

In block 308, the motor controller 124 determines whether the arc is initiated. For example, the motor controller 124 may receive weld voltage information and/or weld current information from the power source 102 indicating that the arc has started. If the arc has not initiated (block 308), control returns to block 306.

When the arc is initiated (block 308) and while the trigger 112 remains depressed, the motor controller 124 controls the power source 102 to output the welding-type power and controls the motor 120 to feed the electrode wire 106 to the welding torch 108 at the setpoint feeding speed.

In block 312, the motor controller 124 determines whether the trigger 112 is released. If the trigger is not released (block 312), control returns to block 310.

When the trigger 112 is released (block 312), in block 314 the arc ends and the temperature monitor 132 resets and starts an electrode wire cool down timer. The example temperature monitor 132 uses the electrode wire cool down timer to approximate a temperature of the electrode wire 106 for determining the run-in temperature. The example motor controller 124 returns control to block 302.

FIG. 4 is a flowchart representative of example method 400 which may be implemented by the example systems 100, 150 of FIGS. 1A and/or 1B to determine run-in wire feed speed based on a wire electrode temperature. The example method 400 of FIG. 4 may be performed to implement block 304 of FIG. 3 to determine a run-in wire feed speed based on the electrode wire temperature. The method 400 may be performed after determining that a torch trigger 112 is depressed.

In block 402, the motor controller 124 loads a relationship (e.g., the relationship 130 of FIGS. 1A and 1B) between the run-in wire feed speed and the temperature from a storage device (e.g., the storage device 128). For example, the temperature monitor 132 may load one of the relationships 200, 220, 240 of FIGS. 2A, 2B, 2C.

In block 404, the temperature sensor 134 measures a temperature of the electrode wire. The temperature sensor 134 provides the temperature measurement to the motor controller 124 directly and/or via the temperature monitor 132.

In block 406, the motor controller 124 applies the measured temperature to the loaded relationship 130 to determine the run-in wire feed speed. For example, the motor controller 124 may apply the measured temperature to the relationship 240 to determine the corresponding run-in wire feed speed. When the run-in wire feed speed is determined (block 406), the example method 400 ends and control returns to a calling function, such as block 304 of FIG. 3.

FIG. 5 is a flowchart representative of another example method 500 which may be implemented by the example systems 100, 150 of FIGS. 1A and/or 1B to determine run-in wire feed speed based on a wire electrode temperature. The example method 500 of FIG. 5 may be performed to implement block 304 of FIG. 3 to determine a run-in wire feed speed based on the electrode wire temperature. The method 500 may be performed after determining that a torch trigger 112 is depressed.

In block 502, the motor controller 124 loads a relationship (e.g., the relationship 130 of FIGS. 1A and 1B) between the run-in wire feed speed and an elapsed time from a storage device (e.g., the storage device 128). For example, the temperature monitor 132 may load one of the relationships 200, 220, 240 of FIGS. 2A, 2B, 2C.

In block 504, the temperature monitor 132 reads an electrode wire cool down value from an electrode wire cool down value timer. The temperature monitor 132 determines an estimated temperature of the electrode wire based on a thermal model of the electrode wire cool down value (e.g., an elapsed time since the last weld) and the electrode wire temperature. The temperature monitor 132 may use the weld current, the electrode wire material, the electrode wire diameter, and/or other factors in the thermal model.

In block 506, the temperature monitor 132 applies the electrode wire cool down value (e.g., elapsed time since the release of the trigger 112) to a thermal model to determine the temperature of the electrode wire 106.

In block 508, the motor controller 124 applies the determined temperature to the loaded relationship to determine the run-in wire feed speed. For example, the motor controller 124 may apply the measured temperature to the relationship 240 to determine a corresponding run-in speed. When the run-in wire feed speed is determined (block 506), the example method 500 ends and control returns to a calling function, such as block 304 of FIG. 3.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise one or more application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

The present methods and/or systems may be realized in hardware, software, or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, it is intended that the present method and/or system not be limited to the particular implementations disclosed, but that the present method and/or system will include all implementations falling within the scope of the appended claims.

## Claims

1. A wire feeding system, comprising:
- a wire feed motor to advance electrode wire to a welding torch;
- a temperature monitor to determine a temperature of the electrode wire using at least one of a temperature measurement or a thermal model; and
- a motor controller to control a run-in wire speed based on the temperature of the electrode wire.

2. The wire feeding system as defined in claim 1,
wherein the motor controller is configured to select the run-in wire speed based on a proportional relationship between the temperature of the electrode wire and the run-in wire speed.

3. The wire feeding system as defined in claim 2,
wherein the proportional relationship comprises discrete run-in wire feed speeds corresponding to elapsed time periods following an end of a weld.

4. The wire feeding system as defined in claim 2,
wherein the proportional relationship comprises a continuous decrease in the run-in wire speed as an elapsed time following an end of a weld increases during a time period following the end of the weld.

5. The wire feeding system as defined in one of the preceding claims,
wherein the motor controller is configured to:
- determine an upper limit of the run-in wire speed corresponding to an upper temperature threshold of the electrode wire; and
- decrease the run-in wire speed from the upper limit as time progresses following a first weld until an arc is initiated for a second weld or a lower limit of the run-in wire speed is reached.

6. The wire feeding system as defined in one of the preceding claims,
wherein the motor controller is configured to determine a lower limit of the run-in wire speed corresponding to at least one of a lower temperature threshold or a threshold elapsed time following a previous weld.

7. The wire feeding system as defined in one of the preceding claims, further comprising a temperature sensor configured to measure the temperature of at least one of the electrode wire or a component in thermal communication with the electrode wire, the temperature sensor comprising at least one of an infrared optical temperature sensor, a thermocouple, or a thermistor.

8. The wire feeding system as defined in claim 7,
wherein the temperature sensor is configured to communicate the temperature measurement to the temperature monitor via at least one of a wired communication or a wireless communication, the temperature monitor to apply the thermal model to the temperature measurement to determine the temperature of the electrode wire.

9. A welding-type system, comprising:
- the wire feeding system as defined in one of the preceding claims, and
- a welding-type power source to provide welding-type power to the welding torch

10. The welding-type system of claim 9, further comprising a non-transitory machine readable medium comprising machine readable instructions which, when executed, cause a control circuit to:
- identify an end of a welding arc at a welding torch;
- select a run-in wire speed based on a temperature of electrode wire to be fed by the welding torch;
- identify a trigger actuation event at the welding torch; and
- control a wire feeder to feed the electrode wire at the run-in wire speed.

11. The welding-type system as defined in claim 10,
wherein the instructions are further to cause the control circuit to identify an arc ignition and, in response to the arc ignition, control the wire feeder to feed the wire at a setpoint wire feed speed.

12. The welding-type system as defined in claim 10 or 11,
wherein the instructions are to cause the control circuit to select the run-in wire speed based on a proportional relationship between the temperature of the electrode wire and the run-in wire speed.

13. The welding-type system as defined in one of claims 10 to 12,
wherein the instructions are to cause the control circuit to select the run-in wire speed based on the temperature of the electrode wire comprises determining an elapsed time following the end of the welding arc, the temperature being based on the elapsed time according to a time-temperature relationship.
